# EUROPÄISCHE PATENTSCHRIFT

(11) **EP 1 419 058 B1**
(45) Veröffentlichungstag und Bekanntmachung des Hinweises auf die Patenterteilung: **19.04.2006**
(21) Anmeldenummer: 02791571.9
(22) Anmeldetag: 14.08.2002
(51) Int. Cl.: B60J 7/047

(54) **FAHRZEUG MIT EINER VERSCHLIESSBAREN DACHÖFFNUNG**
VEHICLE WITH A LOCKABLE ROOF OPENING
VEHICULE EQUIPE D'UNE OUVERTURE DE TOIT VERROUILLABLE

(30) Priorität: 21.08.2001 DE 10139977
(43) Veröffentlichungstag der Anmeldung: 19.05.2004
(73) Patentinhaber: Webasto Vehicle Systems International GmbH, 82131 Stockdorf (DE)
(72) Erfinder: GAILLARD de, François, F-85390 Mouilleron en pareds (FR)
(74) Vertreter: Konnerth, Dieter Hans
(86) Internationale Anmeldenummer: PCT/EP2002/009100
(87) Internationale Veröffentlichungsnummer: WO 2003/018341

(56) Entgegenhaltungen:
- EP-A- 0 670 232
- EP-A- 0 934 842
- DE-A- 4 129 852
- DE-A- 19 851 366

## Beschreibung

Die Erfindung betrifft ein Fahrzeug mit den Merkmalen des Oberbegriffs des Anspruchs 1.

Aus der EP 0 591 644 B1 ist ein Fahrzeugdach mit einer Folge von Lamellen bekannt geworden, die zum wahlweisen Verschließen oder zumindest teilweisen Freigeben einer Dachöffnung in dem Fahrzeugdach vorgesehen und an dachfesten Führungen geführt sind. Beim Öffnen des Lamellendaches werden die Lamellen unter ein festes Dachteil, das sich an die Dachöffnung nach hinten anschließt, bewegt und dort in Ablagestellung gestapelt angeordnet. Eine Variante sieht vor, daß die Lamellen in horizontaler Ausrichtung und voneinander beabstandet von einer Heckscheibe angeordnet sind. Die Dachöffnung weist somit die übliche Größe in einer festen Dachfläche auf.

Aus der EP 0 992 384 A2 ist ein Fahrzeug bekannt geworden, bei dem zwischen den seitlichen Dachlängsholmen eines Fließheckdaches ein vorderes Dachteil und ein hinteres Dachteil verschiebbar gelagert sind, um eine große Dachöffnung wahlweise zu verschließen oder zumindest teilweise freizugeben. Die beiden Dachteile können nach hinten auf einen Fließheckscheibenrahmen in Übereinanderlage verschoben werden und zusammen mit dem eine Heckscheibe enthaltenden Fließheckscheibenrahmen um eine Querschwenkachse in eine Ablagestellung in den Fahrzeuginnenraum verschwenkt werden, so daß eine große Dachöffnung in der Art eines Semi- oder Quasi-Cabriolets gebildet ist. Die Dachteile und der Fließheckscheibenrahmen erfordern jedoch einen großen Ablageraum innerhalb des Fahrzeuges.

Aus der gattungsgemäßen DE 41 29 852 A1 ist ein Fahrzeug mit absenkbarer Windschutzscheibe und mit einem eine Dachöffnung enthaltenden Sonnendach bekannt geworden. Das Sonnendach ist vorzugsweise ein Lamellendach. Das Fahrzeug enthält anschließend an das Lamellendach eine Heckscheibe, die absenkbar gebildet sein kann. Die Lamellen, die zum Öffnen des Sonnendaches bzw. zum Freilegen der Dachöffnung verschwenkt und an den Oberrand der Heckscheibe verfahren werden, können mit der sich absenkenden Heckscheibe abgesenkt werden. Dabei wird die Dachöffnung des Sonnendaches durch die ansonsten von der Heckscheibe verschlossene Öffnung zu einer Gesamtdachöffnung erweitert. Ein wesentlicher Nachteil bei dieser Lösung liegt jedoch darin, daß die Heckscheibe in den Kofferraum abgesenkt werden muß, um die zusätzliche Öffnung des Daches beim Absenken der Lamellen freilegen zu können. Hierfür ist sowohl der entsprechende Ablageraum im Kofferraum freizuhalten wie auch ein eigener Antrieb für die Heckscheibe sowie eine entsprechende Führungseinrichtung vorzusehen.

Die EP 0 934 842 A2 offenbart ein Cabrioletverdeck mit einem rolladenartigen Verdeck, das aus einer Vielzahl von miteinander verbundenen Einzellamellen besteht. Eine Verdeckrolle zum Aufwickeln des Verdecks ist in einem Stauraum im hinteren Bereich des Kraftfahrzeugs unterhalb der Gürtellinie, d. h. in einem ansonsten als Kofferraum nutzbaren Bereich angeordnet. Die Dachrahmen und die C-Säulen sind in den hinteren Bereich des Fahrzeugs absenkbar, so daß bei geöffnetem und auf die Verdeckrolle aufgewickeltem Verdeck ein vollständig geöffnetes Cabriolet vorliegt. Des weiteren können im hinteren Bereich des Verdecks durchsichtige Lamellen verwendet werden, so daß ein Heckfenster im Verdeck entsteht.

Aufgabe der Erfindung ist es, ein eingangs genanntes Fahrzeug mit einem Fahrzeugdach zu schaffen, das eine möglichst große freilegbare Dachöffnung aufweist und dennoch für die abgelegten Lamellen im Fahrzeug oder im Kofferraum möglichst wenig oder keinen Ablageraum benötigt.

Diese Aufgabe wird bei dem oben genannten Fahrzeug erfindungsgemäß dadurch gelöst, daß zumindest die hinteren Lamellen, die in ihrer Schließstellung in einem Heckscheibenbereich angeordnet sind, transparente Lamellen oder Glaslamellen sind, und daß bei vollständig freigegebener Dachöffnung alle das Lamellendach bildende Lamellen in einer kompakten Stapelanordnung im Bereich oberhalb einer Hutablage angeordnet sind.

Während bei den eingangs genannten Fahrzeugdächern entweder eine feste Heckscheibe in der festen Dachstruktur angeordnet ist oder eine Heckscheibe in ihrer Gesamtheit zwar aus der Dachöffnung entfernt wird, aufgrund ihrer Größe jedoch ein beim Ablegen sehr sperriges und großen Ablageraum erforderndes Teil darstellt, können die Lamellen, die insbesondere in Fahrzeuglängsrichtung vergleichsweise kurz gebildet sind, in ihrer ausgestellten gestapelten Anordnung am hinteren Ende der Dachöffnung abgelegt werden, ohne daß Ablageraum im Kofferraum oder in einem Stauraum hinter den Sitzen und unter einer Hutablage benötigt wird. Durch die bis in den Bereich der Kofferraumklappe reichende freigelegte Dachöffnung wird ein cabrioähnliches Fahrzeug geschaffen, das dennoch die Vorteile der erhöhten Sicherheit durch die seitlichen Dachlängsholme aufweist. Die Dachöffnung reicht bis an die Kofferraumklappe, wobei unter dem Begriff Kofferraumklappe jedes am Fahrzeugheck oberseitig angeordnete Karosserieteil verstanden wird, wie z. B. auch ein Deckel eines Motorraumes eines Fahrzeugs mit Heckmotor oder auch ein festes flächiges Karosserieaußenteil.

Vorteilhafte Ausgestaltungen der Erfindung sind in den Unteransprüchen angegeben.

Um die Dachöffnung möglichst breit zu bilden, ist es zweckmäßig, wenn die Lamellen an Führungen an den Dachlängsholmen gelagert sind, so daß auf eine feste seitliche Dachfläche zwischen den Dachlängsholmen und der Dachöffnung verzichtet wird.

Die dachfesten Führungen können direkt an karosseriefesten Dachlängsholmen, die die Dachöffnung seitlich begrenzen, angeordnet sind. Alternativ können die Deckelelemente bzw. die Lamellen an Führungen eines Einsatzrahmens gelagert sind, der seitlich an den Dachlängsholmen angeordnet ist. Auf diese Weise kann das vorgefertigte Lamellendach mit geringem Montageaufwand am Fahrzeugdach montiert werden.

Ein solcher Einsatzrahmen des Lamellendaches enthält dann auch die Lagereinrichtung für die Lamellen und eine Antriebseinrichtung zum Bewegen der Lamellen.

Zum Erhöhen der Festigkeit und Steifigkeit des Einsatzrahmens und damit auch der Dachstruktur kann dieser eine Querbindung oder eine Querversteifung aufweisen, die zwischen seinem Vorderende und seinem Hinterende angeordnet ist. An dieser Querverbindung kann zumindest ein Sonnenrollo angeordnet sein. Die Querverbindung ist zweckmäßigerweise oberhalb des Kopfbereichs von Rücksitzinsassen angeordnet.

Für das Wassermanagement am Lamellendach ist zumindest eine Wasserrinne vorzugsweise am Einsatzrahmen gebildet.

Nachfolgend wird ein Ausführungsbeispiel des Fahrzeugs unter Bezugnahme auf die Zeichnung näher erläutert. Es zeigt:
- Fig. 1: in perspektivischer Draufsicht ein Fahrzeug mit einem an beidseitigen Dachlängsholmen gelagerten Glaslamellendach in geöffneter heckseitiger Ablagestellung;
- Fig. 2: in perspektivischer Seitenansicht das Fahrzeug mit geschlossenem Glaslamellendach;
- Fig. 3: in perspektivischer Draufsicht in Explosionsdarstellung eine Rohkarosserie des Fahrzeugs mit einem die Lamellen lagernden Einsetzrahmen des Lamellendaches;
- Fig. 4: in einer Querschnittansicht einen Dachlängsholm mit dem Einsatzrahmen; und
- Fig. 5: eine Innenansicht des geschlossenen Glaslamellendaches.

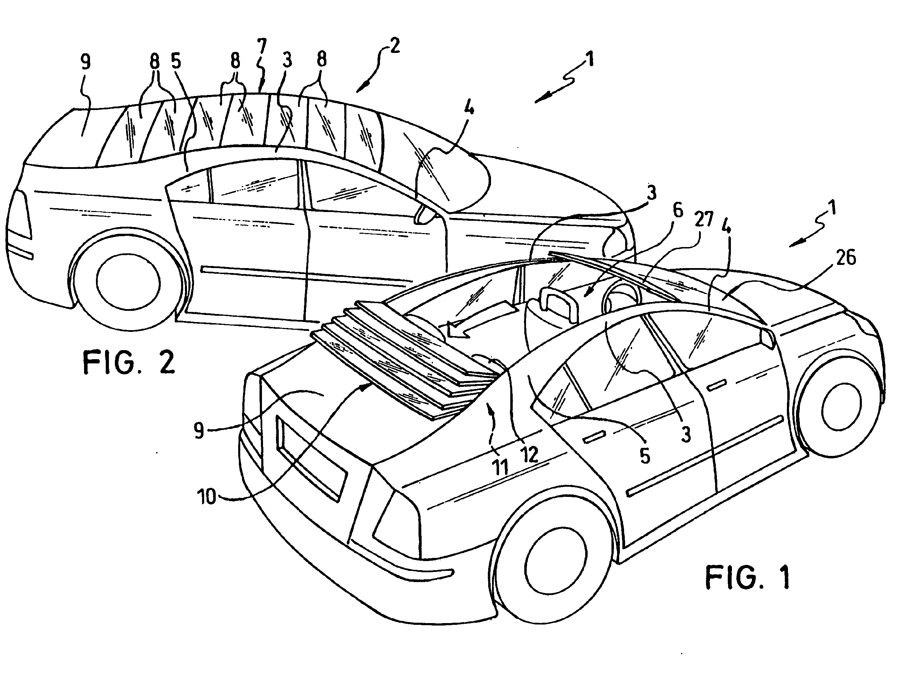

Ein Fahrzeug 1 (siehe Fig. 1 und 2), im Ausführungsbeispiel eine vier- oder fünfsitzige Limousine, beispielsweise mit fließendem Dachverlauf in der Art eines Coupés, weist ein Fahrzeugdach 2 mit seitlichen Dachlängsholmen 3 auf, die sich vorne an die A-Säulen 4 anschließen und hinten in die C-Säulen 5 übergehen oder deren Funktion übernehmen. Zwischen den beiden Dachlängsholmen 3 erstreckt sich eine Dachöffnung 6, die von einer Dachschließeinrichtung in Form eines Lamellendaches 7 mit einzelnen Lamellen 8 aus Glas wahlweise verschließbar (siehe Fig. 1) oder zumindest teilweise freilegbar ist (Fig. 2). Der grundsätzliche Aufbau eines Lamellendaches ist beispielsweise in der DE 196 08 916 C1 oder der EP 0 978 400 A2 beschrieben, auf die hiermit Bezug genommen wird. Die Dachöffnung 6 erstreckt sich zwischen den Dachlängsholmen 3 bzw. den C-Säulen 5 nach hinten bis an eine Kofferraumklappe 9. Die Lamellen 8 sind beidseits jeweils an einer Führungsschiene verschiebbar und mit ihrem Hinterrand 10 ausstellbar gelagert.

Zum Öffnen des Lamellendaches 7 und zum Freilegen der Dachöffnung 6 werden die Lamellen 8 mittels einer Antriebseinrichtung (in Fig. 1 und 2 nicht dargestellt) nach hinten verschoben und in ihrer ausgestellten Anordnung aneinander gestapelt und somit platzsparend in Paketform am Ende der Dachöffnung 6 abgelegt. Dabei sind sie je nach Gestaltung des Fahrzeugdachs 2 bzw. der Dachlängsholme 3 beispielsweise in etwa über einer Hutablage 11 (Position durch gestrichelten Pfeil in Fig. 1 angedeutet) hinter den Rücksitzen 12 angeordnet. In dieser Ablagestellung wird weder im Fahrzeuginnenraum noch im Kofferraum Ablageraum benötigt.

Die lange Dachöffnung 6 wird ermöglicht, da auch eine üblicherweise vorhandene Heckscheibe von den bewegbaren Lamellen 8 des Lamellendaches 7 gebildet wird und somit unterteilt und platzsparend ablegbar ist.

Da lediglich die Dachlängsholme 3 die Dachöffnung 6 seitlich begrenzen und die abgelegten Lamellen 8 am Hinterende der langen Dachöffnung 6 angeordnet sind, erhalten die Insassen bei geöffnetem Dach den Eindruck eines Semi- oder Quasi-Cabriolets bei dennoch erhöhter Sicherheit durch die fahrzeugfesten Dachlängsholme 3.

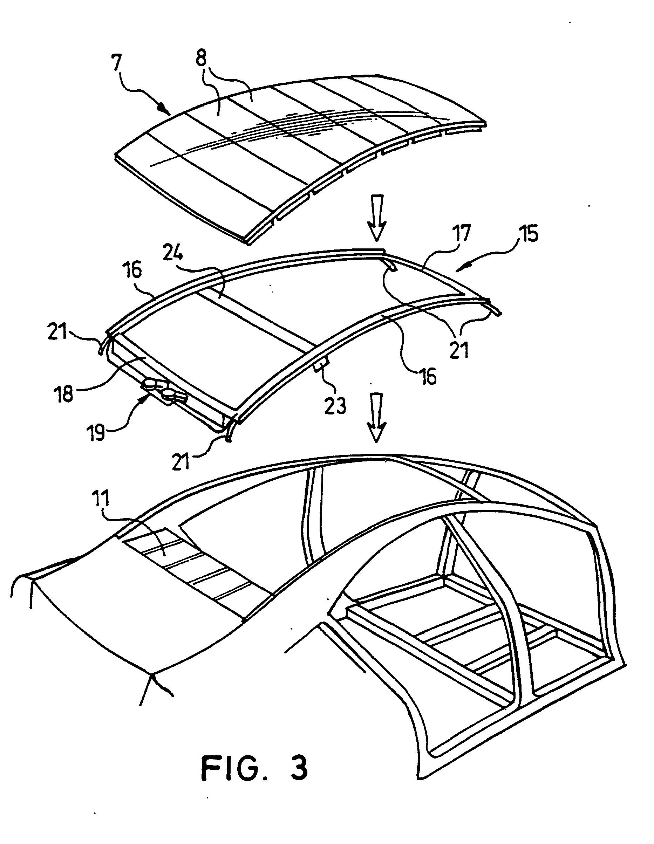

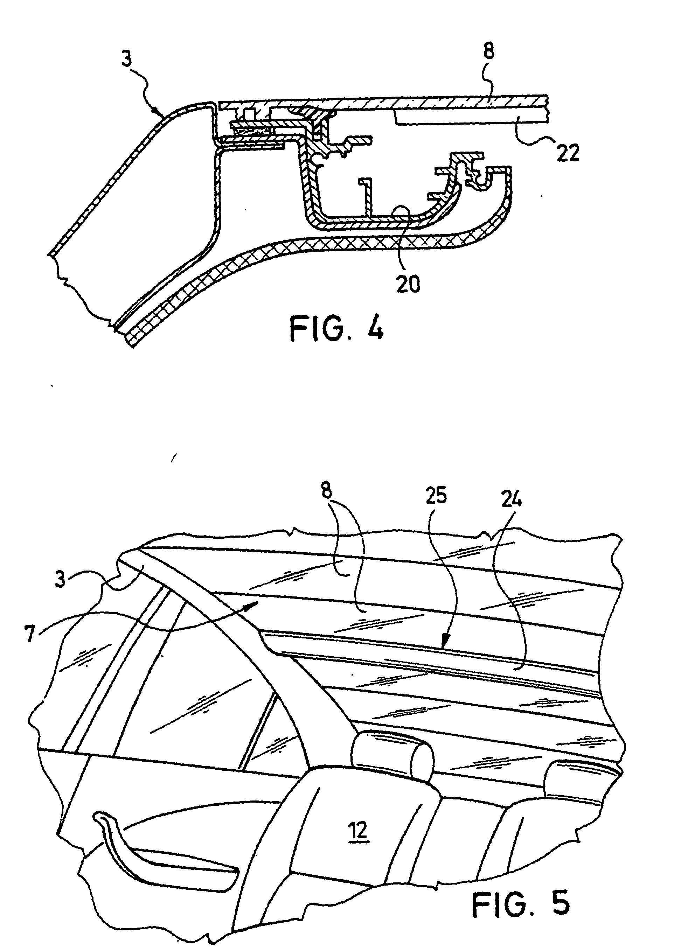

Die Lamellen 8 sind beispielsweise an beidseitigen Führungsschienen, die unmittelbar an den Dachlängsholmen 3 befestigt sind, gelagert. In einer alternativen Variante ist das Lamellendach 7 an einem Einsatzrahmen 15 komplett angeordnet (Fig. 3), der beidseits jeweils eine Längsschiene 16 zum Lagern einer Lagereinrichtung der einzelnen Lamellen 8, eine vordere schmale Querverbindung 17 zwischen den beiden Längsschienen 16 und eine hintere Querverbindung 18 mit einer Antriebseinrichtung 19 zum Bewegen der Lamellen 8 aufweist. Der Einsatzrahmen 15 enthält auch eine bevorzugt umlaufende Wasserrinne 20 (siehe Fig. 4) an den Längsschienen 16 und in den Eckbereichen angeordnete Anschlußrohre 21 zur Wasserableitung. Über die Wasserrinne 20 wird Wasser abgeführt, das an einer Querrinne 22 gesammelt wird (Fig. 4), die an jeder Lamelle 8 an ihrem Vorder- oder Hinterrand angebracht ist und bei geschlossenem Lamellendach den Stoß zwischen zwei Lamellen 8 untergreift. Der Einsatzrahmen 15 wird als vorgefertigtes Modul in die Dachöffnung eingesetzt und an der Karosserie befestigt. Die Befestigung erfolgt durch Einkleben an den Dachrahmen oder durch Verschrauben an Haltezungen 23, die am Einsetzrahmen 15 oder am Dachrahmen angebracht sind.

An einer aussteifenden Querverbindung 24, die in etwa im Kopfbereich von Fondinsassen angeordnet ist, kann ein Sonnenrollo 25 (siehe Fig. 5), das nach vorne oder nach hinten ausziehbar ist, oder können auch zwei Sonnenrollos gelagert sein, um den Vorderabschnitt oder den Hinterabschnitt des Lamellendaches 7 bedarfsweise in dem gewünschten Umfang abzuschatten.

Am Windlauf oberhalb der Frontscheibe 26 kann auch ein ausstellbarer Windabweiser 27, z. B. aus Glas, vorgesehen sein. Der Windabweiser 27 kann auch von einer ersten vorderen Lamelle des Lamellendaches 7 gebildet sein, die beim Öffnen das Daches nicht nach hinten verlagert wird.

### Bezugszeichenliste

- 1: Fahrzeug
- 2: Fahrzeugdach
- 3: Dachlängsholm
- 4: A-Säule
- 5: C-Säule
- 6: Dachöffnung
- 7: Lamellendach
- 8: Lamelle
- 9: Kofferraumklappe
- 10: Hinterrand
- 11: Hutablage
- 12: Rücksitz
13
14
- 15: Einsatzrahmen
- 16: Längsschiene
- 17: vordere Querverbindung
- 18: hintere Querverbindung
- 19: Antriebseinrichtung
- 20: Wasserrinne
- 21: Anschlußrohr
- 22: Querrinne
- 23: Haltezunge
- 24: Querverbindung
- 25: Sonnenrollo
- 26: Frontscheibe
- 27: Windabweiser

## Patentansprüche

1. Fahrzeug, insbesondere Limousine oder Coupé, mit einem Fahrzeugdach mit einer Folge von an dachfesten Führungen geführten Lamellen (8) eines Lamellendaches (7) zum wahlweisen Verschließen oder zumindest teilweisen Freigeben einer sich bis an eine heckseitige Kofferraumklappe (9) erstreckenden Dachöffnung (6) in dem Fahrzeugdach, wobei die Lamellen (8) ausschwenkbar sind und zum vollständigen Freigeben der Dachöffnung (6) in ihrer Ausschwenkstellung am Hinterende der Dachöffnung (6) gestapelt angeordnet sind,
**dadurch gekennzeichnet,**
**daß** zumindest die hinteren Lamellen (8), die in ihrer Schließstellung in einem Heckscheibenbereich angeordnet sind, transparente Lamellen oder Glaslamellen sind, und
**daß** bei vollständig freigegebener Dachöffnung alle das Lamellendach (7) bildende Lamellen (8) in einer kompakten Stapelanordnung im Bereich oberhalb einer Hutablage (11) angeordnet sind.

2. Fahrzeug nach Anspruch 1
**dadurch gekennzeichnet, daß** die dachfesten Führungen an karosseriefesten Dachlängsholmen (3), die die Dachöffnung (6) seitlich begrenzen, angeordnet sind.

3. Fahrzeug nach Anspruch 1 oder 2,
**dadurch gekennzeichnet, daß** die Lamellen (8) an Führungen (16) eines Einsatzrahmens (15) gelagert sind, der seitlich an den Dachlängsholmen (3) angeordnet ist.

4. Fahrzeug nach Anspruch 3,
**dadurch gekennzeichnet, daß** der Einsatzrahmen (15) des Lamellendaches (7) die Lagereinrichtung für die Lamellen (8) und eine Antriebseinrichtung (19) zum Bewegen der Lamellen (8) aufweist.

5. Fahrzeug nach Anspruch 3 oder 4,
**dadurch gekennzeichnet, daß** der Einsatzrahmen (15) des Lamellendaches (7) eine Querbindung (24) zwischen seinem Vorderende (17) und seinem Hinterende (18) aufweist.

6. Fahrzeug nach Anspruch 5,
**dadurch gekennzeichnet, daß** an der Querverbindung (24) ein Sonnenrollo (25) angeordnet ist.

7. Fahrzeug nach Anspruch 5 oder 6,
**dadurch gekennzeichnet, daß** die Querverbindung (24) oberhalb des Kopfbereichs von Rücksitzinsassen angeordnet ist.

8. Fahrzeug nach einem der Ansprüche 3 bis 7,
**dadurch gekennzeichnet, daß** der Einsatzrahmen (15) eine Wasserrinne (20) aufweist.

## Claims

1. Vehicle, in particular saloon or coupé, with a vehicle roof having a sequence of louvres (8) belonging to a louvred roof (7) and guided on guides fixed to the roof for the optional closure or at least partial exposure of a roof opening (6) in the vehicle roof extending as far as a boot lid (9) at the rear, it being possible for the louvres (8) to be pivoted out and, in order to expose the roof opening (6) completely, the louvres being arranged so as to be stacked at the rear end of the roof opening (6) in their pivoted-out position, **characterized in that** at least the rear louvres (8) which, in their closed position, are arranged in the region of a rear window, are transparent louvres or glass louvres, and **in that**, when the roof opening is exposed completely, all the louvres (8) forming the louvred roof (7) are arranged in a compact stack arrangement in the region above a rear parcel shelf (11).

2. Vehicle according to Claim 1, **characterized in that** the guides fixed to the roof are arranged on roof longitudinal members (3) which are fixed to the bodywork and bound the roof opening (6) at the sides.

3. Vehicle according to Claim 1 or 2, **characterized in that** the louvres (8) are mounted on guides (16) of a frame insert (15) which is arranged laterally on the roof longitudinal members (3).

4. Vehicle according to Claim 3, **characterized in that** the frame insert (15) of the louvred roof (7) has the mounting device for the louvres (8) and a drive device (19) for moving the louvres (8).

5. Vehicle according to Claim 3 or 4, **characterized in that** the frame insert (15) of the louvred roof (7) has a transverse connection (24) between its front end (17) and its rear end (18).

6. vehicle according to Claim 5, **characterized in that** a roller sunblind (25) is arranged on the transverse connection (24).

7. Vehicle according to Claim 5 or 6, **characterized in that** the transverse connection (24) is arranged above the head region of rear seat occupants.

8. Vehicle according to one of Claims 3 to 7, **characterized in that** the frame insert (15) has a water channel (20).

## Revendications

1. Véhicule, en particulier une limousine ou un coupé, pourvu d'un toit de véhicule avec une série de lamelles (8) d'un toit à lamelles (7), guidées sur des coulisses ou rails solidaires du toit, pour la fermeture au choix ou la libération au moins partielle d'une ouverture de toit (6) s'étendant jusqu'à un clapet ou couvercle de coffre arrière (9) dans un toit de véhicule, les lamelles (8) pouvant être basculées et disposées de manière superposée dans leur position de basculement au niveau de l'extrémité arrière de l'ouverture de toit (6) pour la libération totale de l'ouverture de toit (6), **caractérisé en ce qu'**au moins les lamelles arrières (8), lesquelles sont disposées dans une zone de vitre arrière dans leur position fermée, sont des lamelles transparentes ou des lamelles de verre, et que lors d'une libération totale de l'ouverture de toit, toutes les lamelles (8) formant le toit de lamelles (7) sont disposées dans un agencement superposé compact dans une zone au-dessus d'une plage arrière de dépôt de chapeau ou de toit(11).

2. Véhicule selon la revendication 1, **caractérisé en ce que** les coulisses fixées sur le toit sont disposées ou arrangées au niveau de chapeaux de faîtage ou longerons de toit (3) solidaires de la carosserie, lesquels limitent latéralement l'ouverture de toit (6).

3. Véhicule selon la revendication 1 ou 2, **caractérisé en ce que** les lamelles (8) sont logées au niveau de coulisses (16) d'un cadre intérieur ou d'insert (15), lequel est disposé ou arrangé latéralement au niveau des chapeaux de faîtage ou longerons de toit (3).

4. Véhicule selon la revendication 3, **caractérisé en ce que** le cadre intérieur ou d'insert (15) du toit de lamelles (7) est pourvu du dispositif de logement pour les lamelles (8) et d'un dispositif d'entraînement (19) pour le déplacement des lamelles (8).

5. Véhicule selon la revendication 3 ou 4, **caractérisé en ce que** le cadre intérieur ou d'insert (15) du toit de lamelles (7) est pourvu d'une liaison transversale (24) entre l'extrémité avant (17) et l'extrémité arrière (18) de celui-ci,

6. Véhicule selon la revendication 5, **caractérisé en ce qu'**un rouleau pare-soleil (25) est disposé ou arrangé au niveau de la liaison transversale (24).

7. Véhicule selon la revendication 5 ou 6, **caractérisé en ce que** la liaison transversale (24) est disposée au-dessus de la zone de têtes des occupants des sièges arrière.

8. Véhicule selon l'une des revendications 3 à 7, **caractérisé en ce que** le cadre intérieur ou d'insert (15) est pourvu d'une rigole à eau ou gouttière (20).
